# NEW EUROPEAN PATENT SPECIFICATION

(11) **EP 3 056 475 B2**
(45) Date of publication and mention of the opposition decision: **07.12.2022**
(45) Mention of the grant of the patent: 06.12.2017
(21) Application number: 15154662.9
(22) Date of filing: 11.02.2015
(51) Int. Cl.: C03C 12/00, C03C 17/00

(54) **Composition, marking and kit of parts for forming a marking, such as a road marking**
Zusammensetzung, Markierung und Teile-Bausatz zur Bildung einer Markierung, wie einer Fahrbahnmarkierung
Composition, marquage et kit de pièces permettant de former un marquage, tel qu'un marquage routier

(43) Date of publication of application: 17.08.2016
(73) Proprietor: Geveko Markings Denmark A/S, 5900 Rudkøbing (DK)
(72) Inventor: Fage-Pedersen, Anders Michael, 5700 Svendborg (DK)
(74) Representative: AWA Sweden AB

(56) References cited:
- WO-A1-00/23257
- WO-A1-01/42349
- WO-A1-2009/085550
- AU-A4- 2014 101 250
- DE-A1- 4 105 319
- JP-A- H0 497 005
- KR-A- 20020 017 667
- US-A- 2 574 971

## Description

### Technical field

The invention relates to a composition adapted to be applied to a surface to form a road marking. The invention also relates to a road marking formed of said composition. The invention also relates to a kit of parts for forming a road marking on a surface. The invention also relates to a road marking formed of such a kit of parts.

### Background technology

Road markings are used on roads for different purposes including visualising borders of the road and division of the road into separate lanes. It is therefore of importance that the road markings are visible also in low light conditions. To provide the markings with desired visibility, road markings are often retro-reflective and are thereby capable of reflecting light back to its source. In respect of road markings, the retro-reflective marking is capable of reflecting light from the vehicle's headlight back to the driver. Preferably the retro-reflective marking is capable of reflecting more light from a vehicle's headlight in a direction back towards the driver of the vehicle, compared to other directions.

It has been known for a long time to improve retro-reflective properties of a road marking by adding glass beads to the road marking.

As early as in the 1950's it was disclosed to use glass beads in highway marking paint. GB 704,640 discloses to use glass beads in a paint. The paint comprises 38% pigments. It is also discussed to use 25-60% pigments. One example mentioned is water-dispersible titanium dioxide pigment.

However, to use such high amounts of pigments have today been proven to be too expensive. Moreover, many pigments, such as titanium dioxide have an environmental impact which makes it non-acceptable to use such high amounts of pigments.

To address the issue of improved retro-reflectivity, other approaches have been tried through-out the years.

It is known that glass particles having a refractive index approaching 2 will produce a high retro-reflectivity. However, such glass particles are comparably expensive.

It is known to provide glass beads with different coatings to increase the refractive index.

In KR20020017667 it is disclosed a method of producing glass beads having a high refractive index. The glass beads are adapted to be used for road markers. The high refractive index glass beads are produced by coating a low refractive index glass powder with high refractive index materials through sol-gel process, and thermal treating. The glass beads with a high refractive index (more than 1.8) are prepared by the following steps: coating low refractive index glass powder of soda lime composition, being 10-1000 micrometer in size, with a sol of high refractive material which is an organic metal selected form the group consisting of Ti, Ba and Pb or salt thereof through an impregnating process; drying at room temperature for coating high refractive index glass powder with a coating film; and thermal treating over a softening point of low refractive index glass to form a glass bead with a glass coating film.

In US 2011/0200789 A1 it is also disclosed a method of providing high refractive index glass beads. It is disclosed to provide a solid spherical core with one or more interference layer surrounding the core. The different layers are selected to have a difference in refractive index of 0,1 or more. Thereby light is reflected at interfaces between the different layers and the core. It is mentioned that suitable materials to use as coatings for the interference layers include inorganic materials to provide transparent coatings. Such coatings tend to make bright, highly retro-reflective articles. Included within the foregoing inorganic materials are inorganic oxides such as Ti0₂ (refractive index of 2.2-2.7) and Si0₂ (refractive index of 1.4-1.5) and inorganic sulphides such as ZnS (refractive index of 2.2). The foregoing materials can be applied using any of a variety of techniques. Other suitable materials having a relatively high refractive index include CdS, Ce0₂, Zr0₂, Bi₂0₃, ZnSe, WO₃, PbO, ZnO, Ta₂0₅, and others known to those skilled in the art. Other low refractive index materials suitable for use in the present invention include Al₂0₃, Bp₃, AlF₃, MgO, CaF₂, CeF₃, LiF, MgF₂ and Na₃AlF₆. In 2011/0200789 A1 it is disclosed to alternate layers of high refractive index with layers of high refractive index to produce a great number of interfaces with different refractive indexes.

AU 2014101250 discloses the provision of an adhesion coating on the glass beads to improve the bead retention.

WO 01/42349 A1 discloses the provision of a cohesive coating on the glass beads to improve the bead durability. It is discussed how the coating should have a surface tension closer to the surface tension of the polymeric matrix than the surface tension of the beads.

JP H04 97005A discloses the provision of a water repellent coating designed to provide an air layer between the beads and water also on a rainy day.

However, road markings making use of such so-called high refractive index glass beads still requires significant amounts of pigments to provide the marking with the desired colouring of the marking. Moreover, the markings with the high refractive index glass beads also require significant amounts of pigments to provide the desired retro-reflectivity.

Thus, there is still a need to provide a new kind of technology that provides an even further improved retro-reflectivity relative to the pigment needed to produce this retro-reflectivity. Furthermore, as mentioned above, various ecological studies recommend minimizing the usage of various pigments such as TiO2.

### Summary of the invention

The above object has been achieved with a new technology. The technology makes use of glass beads which has been coated. The coated glass beads are used together with a base composition. The base composition may e.g. be paint, a thermoplastic or a cold plastic, preferably of the kinds defined in EN1871 entitled "Road marking materials - Physical properties". The base composition may be adapted to be applied to a surface to form a marking. The base composition may alternatively be used to provide a pre-formed marking, such as a tape, preformed cold plastic or preformed thermoplastic marking, preferably of the kinds defined in EN1790 entitled "Road marking materials - Preformed road markings".

The composition is adapted to be applied to a surface to form a road marking, wherein the composition comprises a base composition, and glass beads, wherein the coated glass beads are mixed with the base composition.

The coated glass beads are coated with a coating material, which, when the composition has been applied to a surface to form a marking, is adapted to be worn off at any exposed portion of the glass bead thereby allowing light to enter into the glass bead at said exposed worn off portion and which coating material is adapted to form a retro-reflective coating reflecting light which has passed into the glass bead to be reflected back-through the glass bead and out through said exposed portion where the coating has been worn off. The coating material may e.g. comprise TiO₂. The coating material is provided in such an amount that it will provide a retro-reflective coating reflecting light that has passed into the glass bead. The coating material is provided in such an amount that before it is worn off, it will be non-translucent. Thus, before the coating material has been worn off it will essentially not allow light to enter into the glass bead. Once the coating material has been worn of at any exposed portion, (and only thereafter) it will allow light to enter into the glass bead and thereafter will it provide it superior retro-reflective properties. It is recognised that there may be many different materials that may be used to provide this retro-reflectivity. Depending upon the choice of material, the amount of coating material will vary greatly. The coated glass beads allow light, which enters the glass bead, to be retro-reflected in the area of the interface of the glass and the coating, or in the coating, and, thus the retro-reflection does not rely on properties of the base composition. Thereby, the use of materials which enhances retro-reflection may be concentrated to the coating while minimised or even avoided in the base composition. Thereby it is possible to provide the desired retro-reflective properties with amounts of pigments being significantly lower than for the known prior art technologies.

To provide this excellent retro-reflectivity, the coating should be such that it, when coated on premix glass beads according to EN 1424 class A having a size within 180 and 600 µm and with the coated glass beads being provided in an amount of 30% by weight in a non-pigmented reference composition, will produce a reflectivity of at least 100 mcd/lux/m2 measured at a wear simulator turntable according to standard EN 13197 at traffic class P4. Traffic class P4 equates to 500.000 wheel passages in said standard. The amount of pigment in the coating material is between 0,5% to 5% by weight of the glass of the coated glass beads.

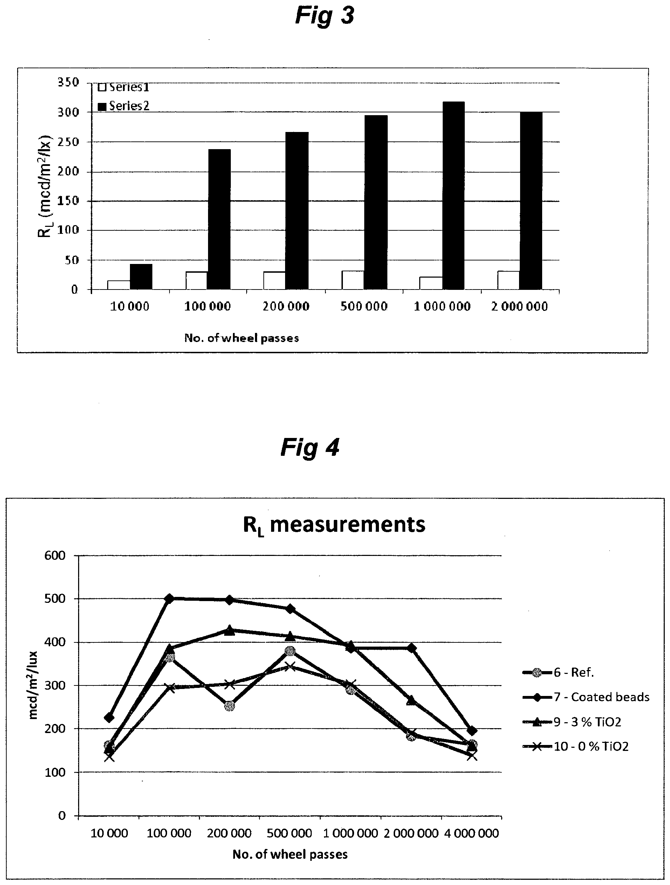

As is shown in fig 3, the example in series 1 with non-coated glass beads provided according to EN 1424 class A having a size within 180 and 600 µm and with the coated glass beads being provided in an amount of 30% by weight in a non-pigmented reference composition results in an reflectivity which is significantly lower than 100 mcd/lux/m2.

Mixing of the coated glass beads with the base composition results in the coated beads being spread in the base composition, thereby providing efficient retro-reflection also when the marking is worn, such as, for example, in the case of a road marking being worn down by the wheels of passing vehicles and by the influence of ambient parameters such as wind, rain and sun. New coated glass beads will be exposed and the coating will be worn off from those newly exposed glass beads. It is also an advantage that the coating truly provides a colouring effect to the light reflected back. It is possible to provide a truly white retro-reflectivity or a yellow retro-reflectivity if so is desired.

The non-pigmented reference composition comprises in percent by weight, apart from said 30% by weight of coated glass beads, 13% resin, 13% sand, 41% dolomite, and 3% plasticiser.

The composition actually adapted to be applied to a surface to form a marking may comprise glass beads with a size between 180 and 600 micrometers. Preferably the glass beads are of class A according to EN 1423 and EN 1424, respectively.

The composition actually adapted to be applied to a surface to form a marking may comprise between 5-80% by weight of coated glass beads, preferably between 20-50%.

The coating material may comprise white or yellow pigments. The white pigments may comprise TiO₂ or ZnO. These pigments are useful since they provide retro-reflectivity and since they provide a white colour. In case it is desired to have a yellow marking the coating may e.g. comprise a blend of an equal amount of TiO₂ and a yellow pigment, such as PY13.

The amount of coating material may be between 0,1 % to 15% by weight of the glass of the coated glass beads, preferably between 0,1 % to 10%, and most preferably between 1% to 10%. These amounts are especially, but not exclusively, suitable when TiO₂ is used as pigment. The pigment makes up about 50% of the coating and the remainder of the coating is a binder, such as a resin binder. Thus, the amount of pigment, such as TiO₂, is between 0,5% to 5%.

The base composition comprises between 0-7%, preferably between 0-3% of TiO₂ or a blend of TiO₂ and a yellow pigment, such as PY13. This way the marking as such will have a white colour or a yellow colour.

The base composition may be thermoplastic.

The composition may be supplied in granular or powder form and may be adapted to be heated to a molten state and to be applied to a surface in any desired form. This is a way of providing a composition often used for production of lane or side markers.

The marking may be formed into a pre-formed sheet of a thermoplastic road marking material, wherein the pre-formed sheet is adapted to be applied to a surface and to be heated to a partly molten state and to adhere to said surface. This is a way of providing a composition which is useful when comparably complex shapes of the marking is desired. It is e.g. useful when it is desired to have a marking shaped as a symbol. The symbol may e.g. be letters, arrows, bi-cycle symbols, and wheel chair symbols.

When using the composition to form a road marking, the marking, may apart from coated glass beads mixed with the base composition, further comprise coated drop-on beads, wherein the composition comprising the base composition and the coated premix glass beads is adapted to be applied to a surface and the coated drop-on glass beads are adapted to thereafter be applied to the composition as drop-on beads,
wherein the coated drop-on glass beads are coated with a coating material which coating material is adapted to be worn off at any exposed portion of the glass beads thereby allowing light to enter into the glass beads at said exposed worn off portion and which coating material is adapted to form a retro-reflective coating reflecting light which has passed into the glass beads to be reflected back through the glass beads and out through said exposed portion where the coating has been worn off,
wherein the coating, when coated on drop-on glass beads according to EN 1423 class A having a size within 180 and 600 µm and with the coated glass beads being provided in an amount of 30% by weight in a non-pigmented reference composition, will produce a reflectivity of at least 100 mcd/lux/m2 measured at a wear simulator turntable according to EN 13197 at traffic class P4.

It may be noted that in the application of the actual marking, coated drop-on beads may be used together with conventional non-coated drop-on beads.

The composition may also be provided as a kit of parts for forming a road marking on a surface, wherein the kit of parts comprises:
a base composition, and
coated drop-on glass beads,
wherein the base composition and coated drop-on glass beads are provided without being mixed with each other,
wherein the base composition is adapted to be applied to a surface and the coated glass beads are adapted to thereafter be applied to the base composition as drop-on beads,
wherein the coated glass beads are coated with a coating material which coating material is adapted to be worn off at any exposed portion of the glass beads thereby allowing light to enter into the glass beads at said exposed worn off portion and which coating material is adapted to form a retro-reflective coating reflecting light which has passed into the glass beads to be reflected back through the glass beads and out through said exposed portion where the coating has been worn off, wherein the coating material is provided in such an amount that before it is worn off, the coating is non-translucent,
wherein the coating, when coated on drop-on glass beads according to EN 1423 class A having a size within 180 and 600 µm and with the coated glass beads being provided in an amount of 30% by weight in a non-pigmented reference composition, will produce a reflectivity of at least 100 mcd/lux/m2 measured at a wear simulator turntable according to EN 13197 at traffic class P4, wherein the amount of pigment is said coating material is between 0,5% to 5% by weight of the glass of the coated drop-op glass beads.

It may be noted that the composition provided as a kit of parts with a base composition and coated drop-on beads may refer to a system with the base composition being mixed with coated premix beads as discussed above. In this context it may especially be noted that the preferred embodiments of the composition with base composition and premix beads are applicable also for the kit of parts composition. In such a case the kit of parts may in one alternative be a kit of parts including a premix with the base composition and coated premix beads mixed as one part and the drop-on beads as a second part. Alternatively the kit of parts may be a base composition as a first part, the coated premix beads as a second part and the coated drop-on beads as a third part. Alternatively, the kit of parts may relate to a system with the base composition not being mixed with any coated premix beads or the kind discussed above.

The coated drop-on glass beads may be applied to a visible surface of the marking in an average amount of 200 to 600 grams per square metre of the visible surface. This is useful both for markings with and markings without any coated premix beads. It may also be noted that coated drop-on beads may also be used in combination with non-coated glass beads.

### Brief description of drawings

The invention will by way of example be described in more detail with reference to the appended schematic drawings, which shows a presently preferred embodiment of the invention.
Fig 1a-b shows a marking according to an embodiment.
Fig 2 shows a marking according to an embodiment.
Fig 3 is a diagram illustrating experimental results.
Fig 4 is a diagram illustrating experimental results.

### Detailed description

Embodiments will now be discussed with reference to the figures. The discussions are made for the sake of clarifying and exemplifying embodiments of the invention. The figures and details of the figures are schematically illustrated and not attempted to be drawn to scale.

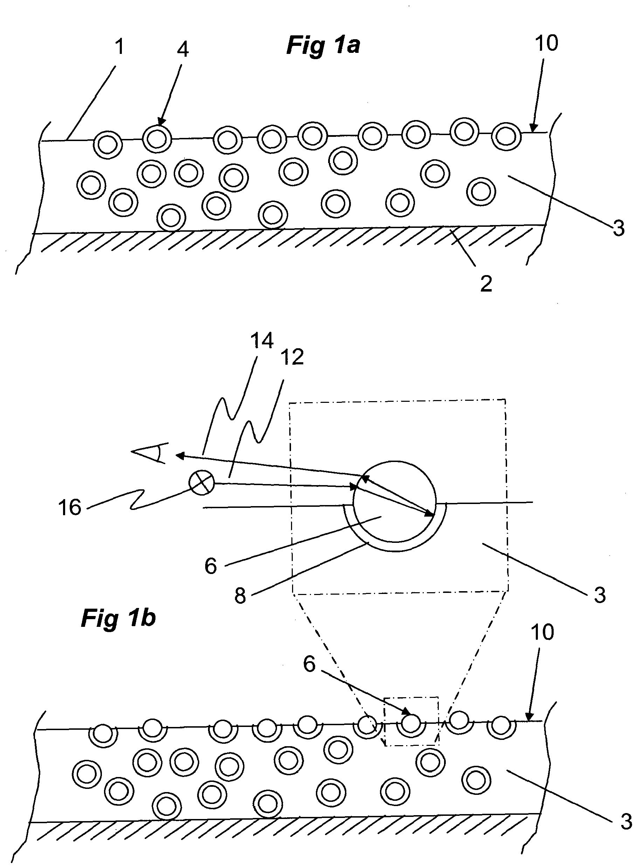

With reference to figures 1a-b, an embodiment relating to a road marking comprising a base composition 3 and coated premix glass beads 4 will now be discussed. The road marking 1 is applied on a road surface 2, such as a road surface made of asphalt. The road marking 1 comprises coated glass beads 4, with a core of a glass bead 6 and a coating 8. It is noted that the coated glass beads 4 are homogenously mixed in with the base composition 3.

Fig 1 a illustrates the marking 1, as seen after the composition has been applied to the road surface 2 but before any wear has occurred. Fig 1 b shows the same road marking 1 after a certain amount of wear has occurred.

After initial wear of the marking 1, any coating at exposed portions of the coated glass beads 4 has been worn off. Exposed portions of the glass beads 4 are portions protruding from the top surface 10 of base composition 3 of the marking 1. Such exposed portions of the glass beads 4 are not embedded in the base composition 3 and are therefore not protected against wear. The wear may e.g. originate from the wheels of cars driving over the marking 1. The result of the wearing off of the coating is a local absence of the coating 8 which exposes the glass beads 6 and thereby permits light to enter into the glass bead 4 and be reflected in the remaining coating 8.

The inset of fig 1b illustrates how the light is retro-reflected from for example the head lights 16 of a vehicle, wherein arrow 12 illustrates a light path from the vehicle to the glass bead 4, and arrow 14 illustrates a light path of that light being retro-reflected towards the vehicle, such that the driver can see the marking 1.

As the marking 1 is worn further, new coated glass beads 4 will surface, the exposed coating 8 of those glass beads 4 will be worn off and the retro-reflective properties of the marking 1 will remain over time.

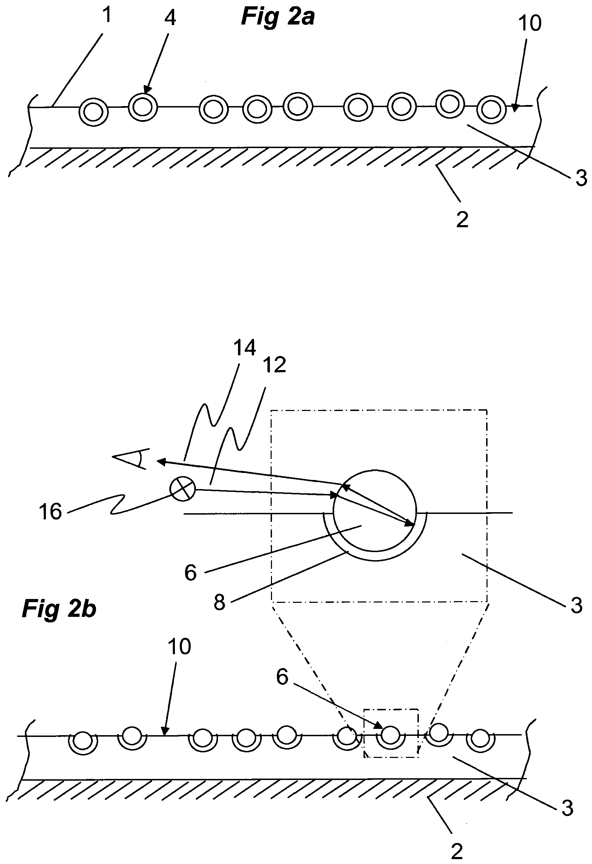

Fig 2 shows an embodiment where coated drop-on beads 4 has been dropped on a base composition 3 once the base composition 3 has been applied to the road surface 2.

The road marking 1 is applied on a road surface 2. Before the base composition 3 has hardened or solidified coated drop-on beads 4 are dropped on top of the base composition 3 applied to the road surface 2. The drop-on beads 4 are applied to the marking 1 in an amount of 200-600 grams per square meter.

Fig 2a illustrates the marking 1, as seen after the base composition 3 has been applied to the road surface 2 and the drop-on beads 4 have been dropped onto the marking 1, but before any wear has occurred. Fig 2b shows the same road marking 1 after a certain amount of wear has occurred.

After initial wear of the marking 1, any coating at exposed portions of the coated glass beads 4 has been worn off. Exposed portions of the glass beads 4 are portions protruding from the top surface 10 of base composition 3 of the marking 1. Such exposed portions of the glass beads 4 are not embedded in the base composition 3 and are therefore not protected against wear. The wear may e.g. originate from the wheels of cars driving over the marking 1. The result of the wearing off of the coating is a local absence of the coating 8 which exposes the glass beads 6 and thereby permits light to enter into the glass bead 4 and be reflected in the remaining coating 8.

The inset of fig 2b illustrates how the light is retro-reflected from for example the head lights 16 of a vehicle, wherein arrow 12 illustrates a light path from the vehicle to the glass bead 4, and arrow 14 illustrates a light path of that light being retro-reflected towards the vehicle, such that the driver can see the marking 1.

### Example, preparation of coated glass beads

Coated glass beads 4 may be prepared according to the following.

In this example the glass beads selected are commercially available e.g. from AllGlass under commercial name Pre-mix 600-180. They are produced in accordance with EN 1423 and EN 1424, they have a nominal size between 600-180µm and are of Soda Lime Glass (class A).

In this example, the glass beads are coated with a total amount of coating of 4 grams of coating per 100 gram glass beads. The TiO₂ content in the coating is 62% (weight). Thus, the total amount of TiO₂ is 2,48 gram TiO₂ per 100 g beads.

The coating may be provided by any method considered appropriate. One example which is easily reproducible also in small scale production or in laboratory settings is disclosed below. Basically, the coating is poured over the beads in a pot and stirred until surface dry (approx. 30 min.). The beads have then been heated to approx. 80 degress celcius for approx. 30 min. for complete curing of the coating. This process have been repeated 4 times (4 layers with 1 gram coating per 100 gram beads) for better coverage.

The method includes the following steps:
1) Start with the binder (acrylic resin)
2) Add solvent (buthylacetat).
3) Add the rutile TiO₂.
4) Shear TiO₂ particles (breaking the TiO₂ agglomerates) and ensure good dispersion.
5) Control viscosity (to ensure good dispersion)
6) Mix the white paint and the hardener (aliphatic polyisocyanate) in the ratio 10:1
7) Mix glass beads and coating.
8) Stir until dry on surface (min. 30 minutes).
9) Drying process, complete curing of the coating (time depends on temperature - e.g. 30 min at 80 degrees C).
10) Repeat coating procedure 4 times

If it is desired to provide the glass beads with a yellow coating, the binder and procedure may be the same as for the white version. In order to provide the yellow coating one may e.g. use a mixture, such as a 50/50 mixture, of TiO₂ and yellow pigment (such as Benzidine Yellow GR).

Other mixtures may be chosen dependent upon the application in which the coated glass beads are to be used.

### Preparation of a base composition

In the description below an example of a base composition will be disclosed. This actual base composition is also used as the non-pigmented reference composition. In this table, suitable examples of the different components have been identified with their commercial trade names.

| Table 1: Reference thermoplastic composition | |
|---|---|
| Component | % (weight) |
| Resin (e.g. Sylvatac RAZ100) | 13 |
| Sand (e.g. Kristall-Quarzsand G11T) | 13 |
| Dolomite (e.g. Microdol 200) | 41 |
| Coated Glass beads (conforming with EN 1424/1423) 600-180µm, class A | 30 |
| Plasticizer (e.g. Castor Oil First Special Grade) | 3 |

The components are mixed and heated to between 180-200 °C. They are stirred for homogenization.

### Examples for the verification of retro-reflectivity

One composition was prepared according to table 1 with the coated glass beads being coated with the TiO₂ coating of 4 grams of coating per 100 gram glass beads with the TiO₂ content being 2,48 gram TiO₂ per 100 g glass beads.

Another composition was prepared in the same manner with the only difference that the glass beads was not coated.

In accordance with the reference test procedure, the thermoplastic compositions were heated and applied in a 3 mm thick layer on a test plate with a surface roughness according to class RG2 (according to EN 13197). The thus applied markings were subjected to a wear simulator turntable test according to EN 13197.

The retro-reflection, R_{L}, was measured according to the standard after certain number of wheel passes. The result of these measurements is shown in fig 3. The result for the composition with coated glass beads is shown in series 2 (the black bars) and the result for the composition with non-coated glass beads is shown in series 1 (white bars). It may be seen that the reference test procedure provides a significant difference for the coated glass beads and the non-coated glass beads.

In fig 4, the results of another comparative study are shown.

The composition in the test named series 6 is the following.

| Component | | % (weight) |
|---|---|---|
| | Resin (rosin ester) | 13 |
| | White sand | 13 |
| | Dolomite | 35 |
| | Glass beads, premix 600-180 | 30 |
| | Rutile TiO₂ | 6 |
| | Plasticizer | 3 |

It may especially be noted that the glass beads are non-coated and that the base composition comprises 6% TiO₂.

The composition in series 7 is the same but with the glass beads being coated with TiO₂.

The composition in series 9 includes 1,5%+1,5% anatase and rutile TiO₂ with change in amount of TiO₂ balanced by the amount of dolomite being increased from 35% to 38%.

The composition in series 10 does not include any TiO₂ in the base composition and the amount of dolomite has been further increased to 41%.

It may be noted from the results shown in fig 4, that it is possible to provide a significant improvement in the retro-reflectivity with a small amount of additional TiO₂ (compare the results for series 6 and 7). The coated glass beads add less than 1 % of TiO₂. It may also be noted that it is possible to provide an improved retro-reflectivity with an amount of TiO₂ being lower than for the reference (series 6) (see the results of series 9 with 3% TiO₂ in the base composition with coated glass beads). It may from the results of series 10 be noted that the invention alternatively provides a possibility to accomplish the same retro-reflectivity with less than 1% of TiO₂ as accomplished with conventional technology using as much as 6% TiO₂. Thus, the inventive technology offers a significant improvement over the prior art.

It may be noted that the compositions actually used as markings may be varied in numerous ways. As mentioned above, the base composition may be any thermoplastic, cold plastic or paint suitable for use as a road marking. Such compositions are defined and discussed in EN1871 entitled "Road marking materials - Physical properties". The amount of coated glass beads may be varied depending on the application and the desired retro-reflectivity. The amount and kind of pigment used in the coating may also be varied depending on the application and the desired retro-reflectivity.

## Claims

1. A composition adapted to be applied to a surface (2) to form a road marking (1), wherein the composition comprises
a base composition (3), and
coated glass beads (4),
wherein the coated glass beads are mixed with the base composition (3),
wherein the coated glass beads (4) are coated with a coating material (8) which coating material, when the composition has been applied to a surface to form a marking, is adapted to be worn off at any exposed portion of the glass bead thereby allowing light to enter into the glass bead (6) at said exposed worn off portion and which coating material (8) is adapted to form a retro-reflective coating (8) reflecting light which has passed into the glass bead (6) to be reflected back through the glass bead (6) and out through said exposed portion where the coating has been worn off,
wherein the coating material (8) is provided in such an amount that before it is worn off, the coating (8) is non-translucent,
wherein the coating material (8) is provided in such an amount that, when coated on premix glass beads according to EN 1424 class A having a size within 180 and 600 µm and with the coated glass beads being provided in an amount of 30% by weight in a non-pigmented reference composition, light which enters the glass bead will be retro-reflected in the area of the interface of the glass and the coating, or in the coating, to produce a reflectivity of at least 100 mcd/lux/m2 measured at a wear simulator turntable according to EN 13197 at traffic class P4,
wherein the amount of pigment in said coating material is between 0,5% to 5% by weight of the glass of the coated glass beads (4).

2. A composition according to claim 1, wherein the non-pigmented reference composition comprises in percent by weight, apart from said 30% by weight of coated glass beads,
13% resin,
13% sand
41% dolomite, and
3% plasticiser.

3. A composition according to claim 1 or 2, wherein the composition adapted to be applied to a surface (2) to form a marking (1) comprises between 5-80% by weight of coated glass beads (4), preferably between 20-50%.

4. A composition according to any one of claims 1-3, wherein the coating material (8) comprises white or yellow pigments.

5. A composition according to any one of claims 1-4, wherein the amount of coating material is between 0,1% to 15% by weight of the glass of the coated glass beads, preferably between 0,1% to 10%, and most preferably between 1% to 10%.

6. A composition according to any one of claims 1-5, wherein the base composition (3) comprises between 0-7%, preferably between 0-3% of TiO₂.

7. A composition according to anyone of claims 1-6, wherein the base composition (3) is thermoplastic.

8. A road marking formed of a composition according to any one of claims 1-7, wherein the marking (1), apart from coated glass beads (4) mixed with the base composition (3), further comprises coated drop-on beads (4), wherein the composition comprising the base composition (3) and the coated premix glass beads (4) is adapted to be applied to a surface (2) and the coated drop-on glass beads (4) are adapted to thereafter be applied to the composition as drop-on beads (4),
wherein the coated drop-on glass beads (4) are coated with a coating material (8) which coating material (8) is adapted to be worn off at any exposed portion of the glass beads (4) thereby allowing light to enter into the glass beads (6) at said exposed worn off portion and which coating material (8) is adapted to form a retro-reflective coating (8) reflecting light which has passed into the glass beads (6) to be reflected back through the glass beads (6) and out through said exposed portion where the coating has been worn off,
wherein the coating material (8) is provided in such an amount that before it is worn off, the coating (8) is non-translucent,
wherein the coating material (8) is provided in such an amount that, when coated on drop-on glass beads (4) according to EN 1423 class A having a size within 180 and 600 µm and with the coated glass beads being provided in an amount of 30% by weight in a non-pigmented reference composition, light which enters the glass bead will be retro-reflected in the area of the interface of the glass and the coating, or in the coating, to produce a reflectivity of at least 100 mcd/lux/m2 measured at a wear simulator turntable according to EN 13197 at traffic class P4.

9. A kit of parts for forming a road marking on a surface, wherein the kit of parts comprises:
a base composition (3), and
coated drop-on glass beads (4),
wherein the base composition and coated drop-on glass beads are provided without being mixed with each other,
wherein the base composition (3) is adapted to be applied to a surface (2) and the coated glass beads (4) are adapted to thereafter be applied to the base composition as drop-on beads (4),
wherein the coated glass (4) beads are coated with a coating material (8) which coating material (8) is adapted to be worn off at any exposed portion of the glass beads (4) thereby allowing light to enter into the glass beads (6) at said exposed worn off portion and which coating material (8) is adapted to form a retro-reflective coating (8) reflecting light which has passed into the glass beads (6) to be reflected back through the glass beads (6) and out through said exposed portion where the coating has been worn off,
wherein the coating material (8) is provided in such an amount that before it is worn off, the coating (8) is non-translucent,
wherein the coating material (8) is provided in such an amount that, when coated on drop-on glass beads (4) according to EN 1423 class A having a size within 180 and 600 µm and with the coated glass beads being provided in an amount of 30% by weight in a non-pigmented reference composition, light which enters the glass bead will be retro-reflected in the area of the interface of the glass and the coating, or in the coating, to produce a reflectivity of at least 100 mcd/lux/m2 measured at a wear simulator turntable according to EN 13197 at traffic class P4,
wherein the amount of pigment in said coating material is between 0,5% to 5% by weight of the glass of the coated drop-on glass beads (4).

10. A marking according to claim 8 or a marking formed of the kit of parts of claim 9, wherein the coated drop-on glass beads are applied to a visible surface of the marking in an average amount of 200 to 600 grams per square metre of the visible surface.

## Patentansprüche

1. Zusammensetzung, die ausgelegt ist, um auf eine Oberfläche (2) zum Bilden einer Straßenmarkierung (1) aufgetragen zu werden, wobei die Zusammensetzung
eine Grundzusammensetzung (3) und
beschichtete Glasperlen (4) umfasst,
wobei die beschichteten Glasperlen mit der Grundzusammensetzung (3) vermischt werden,
wobei die beschichteten Glasperlen (4) mit einem Beschichtungsmaterial (8) beschichtet sind, wobei das Beschichtungsmaterial, wenn die Zusammensetzung auf eine Oberfläche aufgebracht worden ist, um eine Markierung zu bilden, dazu ausgelegt ist, an jedem freigelegten Teil der Glasperle abgenutzt zu werden, wodurch Licht in die Glasperle (6) an dem freigelegten abgenutzten Teil eintreten kann, und wobei das Beschichtungsmaterial (8) ausgelegt ist, um eine retroreflektierende Beschichtung (8) zu bilden, die Licht, das die Glasperle (6) durchlaufen hat, reflektiert, so dass dieses zurück durch die Glasperle (6) und durch den freigelegten Teil, an dem die Beschichtung abgenutzt ist, hinaus reflektiert wird,
wobei das Beschichtungsmaterial (8) in einer solchen Menge bereitgestellt ist, dass die Beschichtung (8), bevor sie abgenutzt ist, nicht durchscheinend ist,
wobei das Beschichtungsmaterial (8) in einer solchen Menge bereitgestellt ist, dass bei der Beschichtung davon auf Vormischglasperlen nach EN 1424 Klasse A mit einer Größe innerhalb von 180 und 600 µm, wobei die beschichteten Glasperlen in einer Menge von 30 Gew.-% in einer nicht pigmentierten Referenzzusammensetzung bereitgestellt sind, Licht, das in die Glasperle eintritt, im Bereich der Grenzfläche von Glas und Beschichtung, oder in der Beschichtung, retroreflektiert wird, um eine Reflektivität von mindestens 100 mcd/lux/m², gemessen an einer Abnutzungssimulatordrehscheibe gemäß EN 13197 bei Verkehrsklasse P4, zu erzeugen,
wobei die Menge an Pigment in dem Beschichtungsmaterial zwischen 0,5 Gew.-% und 15 Gew.-% des Glases der beschichteten Glasperlen (4) beträgt.

2. Zusammensetzung nach Anspruch 1, wobei die nicht pigmentierte Referenzzusammensetzung in Gewichtsprozent neben den 30 Gew.-% beschichteten Glasperlen
13% Harz,
13% Sand,
41% Dolomit und
3% Weichmacher umfasst.

3. Zusammensetzung nach Anspruch 1 oder 2, wobei die Zusammensetzung, die ausgelegt ist, um auf eine Oberfläche (2) zum Bilden einer Markierung (1) aufgebracht zu werden, zwischen 5 Gew.-% und 80 Gew.-% der beschichteten Glasperlen (4), vorzugsweise zwischen 20% und 50%, umfasst.

4. Zusammensetzung nach einem der Ansprüche 1-3, wobei das Beschichtungsmaterial (8) weiße oder gelbe Pigmente umfasst.

5. Zusammensetzung nach einem der Ansprüche 1-4, wobei die Menge an Beschichtungsmaterial zwischen 0,1 Gew.-% und 15 Gew.-% des Glases der beschichteten Glasperlen, vorzugsweise zwischen 0,1% und 10% und am meisten bevorzugt zwischen 1% und 10% beträgt.

6. Zusammensetzung nach einem der Ansprüche 1-5, wobei die Grundzusammensetzung (3) zwischen 0% und 7%, vorzugsweise zwischen 0% und 3% TiO₂ umfasst.

7. Zusammensetzung nach einem der Ansprüche 1-6, wobei die Grundzusammensetzung (3) thermoplastisch ist.

8. Straßenmarkierung, die aus einer Zusammensetzung nach einem der Ansprüche 1-7 gebildet ist, wobei die Markierung (1) abgesehen von beschichteten Glasperlen (4) im Gemisch mit der Grundzusammensetzung (3) ferner nachträglich aufgebrachte Glasperlen (4) umfasst, wobei die Zusammensetzung, die die Grundzusammensetzung (3) und die beschichteten Vormischglasperlen (4) umfasst, ausgelegt ist, um auf eine Oberfläche (2) aufgetragen zu werden, und die beschichteten nachträglich aufzubringenden Glasperlen (4) ausgelegt sind, um danach auf die Zusammensetzung als nachträglich aufgebrachte Perlen (4) aufgebracht zu werden,
wobei die beschichteten nachträglich aufgebrachten Glasperlen (4) mit einem Beschichtungsmaterial (8) beschichtet sind, wobei das Beschichtungsmaterial (8) dazu ausgelegt ist, an jedem freigelegten Teil der Glasperlen (4) abgenutzt zu werden, wodurch an dem freigelegten abgenutzten Teil Licht in die Glasperlen (6) eintreten kann, wobei das Beschichtungsmaterial (8) ausgelegt ist, um eine retroreflektierende Beschichtung (8) zu bilden, die Licht, das die Glasperlen (6) durchlaufen hat, reflektiert, so dass dieses zurück durch die Glasperlen (6) und durch den freigelegten Teil, an dem die Beschichtung abgenutzt ist, hinaus reflektiert wird,
wobei das Beschichtungsmaterial (8) in einer solchen Menge bereitgestellt ist, dass die Beschichtung (8), bevor sie abgenutzt ist, nicht durchscheinend ist,
wobei das Beschichtungsmaterial (8) in einer solchen Menge bereitgestellt ist, dass bei der Beschichtung davon auf nachträglich aufgebrachten Glasperlen nach EN 1424 Klasse A mit einer Größe innerhalb von 180 und 600 µm, wobei die beschichteten Glasperlen in einer Menge von 30 Gew.-% in einer nicht pigmentierten Referenzzusammensetzung bereitgestellt sind, Licht, das in die Glasperle eintritt, im Bereich der Grenzfläche von Glas und Beschichtung, oder in der Beschichtung, retroreflektiert wird, um eine Reflektivität von mindestens 100 mcd/lux/m², gemessen an einer Abnutzungssimulatordrehscheibe gemäß EN 13197 bei Verkehrsklasse P4, zu erzeugen.

9. Teilekit zur Bildung einer Straßenmarkierung auf einer Oberfläche, wobei das Teilekit umfasst:
eine Grundzusammensetzung (3) und
beschichtete nachträglich aufgebrachte Glasperlen (4),
wobei die Grundzusammensetzung und die beschichteten nachträglich aufgebrachten Glasperlen unvermischt bereitgestellt werden,
wobei die Grundzusammensetzung (3) ausgelegt ist, um auf eine Oberfläche (2) aufgebracht zu werden, und die beschichteten Glasperlen (4) ausgelegt sind, um danach auf die Grundzusammensetzung als nachträglich aufgebrachte Glasperlen (4) aufgebracht zu werden,
wobei die beschichteten Glasperlen (4) mit einem Beschichtungsmaterial (8) beschichtet sind, wobei das Beschichtungsmaterial (8) dazu ausgelegt ist, an jedem freigelegten Teil der Glasperlen (4) abgenutzt zu werden, wodurch an dem freigelegten abgenutzten Teil Licht in die Glasperlen (6) eintreten kann, wobei das Beschichtungsmaterial (8) ausgelegt ist, um eine retroreflektierende Beschichtung (8) zu bilden, die Licht, das die Glasperlen (6) durchlaufen hat, reflektiert, so dass dieses zurück durch die Glasperlen (6) und durch den freigelegten Teil, an dem die Beschichtung abgenutzt ist, hinaus reflektiert wird,
wobei das Beschichtungsmaterial (8) in einer solchen Menge bereitgestellt ist, dass die Beschichtung (8), bevor sie abgenutzt ist, nicht durchscheinend ist,
wobei das Beschichtungsmaterial (8) in einer solchen Menge bereitgestellt ist, dass bei der Beschichtung davon auf nachträglich aufgebrachten Glasperlen nach EN 1424 Klasse A mit einer Größe innerhalb von 180 und 600 µm, wobei die beschichteten Glasperlen in einer Menge von 30 Gew.-% in einer nicht pigmentierten Referenzzusammensetzung bereitgestellt sind, Licht, das in die Glasperle eintritt, im Bereich der Grenzfläche von Glas und Beschichtung, oder in der Beschichtung, retroreflektiert wird, um eine Reflektivität von mindestens 100 mcd/lux/m², gemessen an einer Abnutzungssimulatordrehscheibe gemäß EN 13197 bei Verkehrsklasse P4, zu erzeugen,
wobei die Menge an Pigment in dem Beschichtungsmaterial zwischen 0,5 Gew.-% und 15 Gew.-% des Glases der beschichteten nachträglich aufgebrachten Glasperlen (4) beträgt.

10. Markierung nach Anspruch 8 oder eine Markierung, die aus dem Teilekit gemäß Anspruch 9 gebildet wird, wobei die beschichteten nachträglich aufgebrachten Glasperlen auf eine sichtbare Oberfläche der Markierung in einer durchschnittlichen Menge von 200 bis 600 Gramm pro Quadratmeter der sichtbare Oberfläche aufgebracht werden.

## Revendications

1. Composition conçue pour être appliquée sur une surface (2) afin de former un marquage routier (1), la composition comprenant :
une composition de base (3), et
des billes de verre portant un revêtement (4),
dans laquelle les billes de verre portant un revêtement sont mélangées avec la composition de base (3),
dans laquelle les billes de verre portant un revêtement (4) sont revêtues d'un matériau de revêtement (8), ledit matériau de revêtement, lorsque la composition a été appliquée sur une surface pour former un marquage, étant conçu pour être éliminé par usure au niveau de toute partie exposée de la bille de verre, en laissant ainsi la lumière pénétrer dans la bille de verre (6) au niveau de ladite partie exposée usée et ledit matériau de revêtement (8) étant conçu pour former un revêtement rétroréfléchissant (8) réfléchissant la lumière qui a pénétré dans la bille de verre (6), ladite lumière étant réfléchie à travers la bille de verre (6) et ressortant par ladite partie exposée où le revêtement a été éliminé par usure,
dans laquelle le matériau de revêtement (8) est fourni dans une quantité telle qu'avant son élimination par usure, le revêtement (8) soit non translucide,
dans laquelle le matériau de revêtement (8) est fourni dans une quantité telle que, lorsqu'il est appliqué sur des billes de verre de prémélange selon EN 1424 classe A ayant une taille de 180 à 600 µm et les billes de verre portant un revêtement étant fournies dans une quantité de 30 % en poids dans une composition de référence non pigmentée, la lumière qui pénètre dans la bille de verre soit rétroréfléchie dans la région d'interface du verre et du revêtement, ou dans le revêtement, pour produire une réflectivité d'au moins 100 mcd/lux/m², mesurée sur un simulateur d'usure tournant selon EN 13197 dans la classe de trafic P4,
dans laquelle la quantité de pigment dans ledit matériau de revêtement est comprise entre 0,5 % et 5 % en poids du verre des billes de verre portant un revêtement (4).

2. Composition selon la revendication 1, dans laquelle la composition de référence non pigmentée comprend en pourcentage pondéral, indépendamment desdits 30 % en poids de billes de verre portant un revêtement,
13 % de résine,
13 % de sable,
41 % de dolomite, et
3 % de plastifiant.

3. Composition selon la revendication 1 ou 2, la composition conçue pour être appliquée sur une surface (2) afin de former un marquage (1) comprenant de 5 % à 80 % en poids de billes de verre portant un revêtement (4), préférablement de 20 % à 50 %.

4. Composition selon l'une quelconque des revendications 1 à 3, dans laquelle le matériau de revêtement (8) comprend des pigments blancs ou jaunes.

5. Composition selon l'une quelconque des revendications 1 à 4, dans laquelle la quantité de matériau de revêtement est entre 0,1 % et 15 % en poids du verre des billes de verre portant un revêtement, préférablement entre 0,1 % et 10 %, et idéalement de 1 % à 10 %.

6. Composition selon l'une quelconque des revendications 1 à 5, dans laquelle la composition de base (3) comprend entre 0 à 7 %, préférablement entre 0 à 3 %, de TiO₂.

7. Composition selon l'une quelconque des revendications 1 à 6, dans laquelle la composition de base (3) est thermoplastique.

8. Marquage routier formé d'une composition selon l'une quelconque des revendications 1 à 7, le marquage (1), indépendamment des billes de verre portant un revêtement (4) mélangées avec la composition de base (3), comprenant en outre des billes de saupoudrage portant un revêtement (4), la composition comprenant la composition de base (3) et les billes de verre de prémélange portant un revêtement (4) étant conçue pour être appliquée sur une surface (2) et les billes de verre de saupoudrage portant un revêtement (4) étant conçues pour être ensuite appliquées sur la composition en tant que billes de saupoudrage (4),
dans lequel les billes de verre de saupoudrage portant un revêtement (4) sont revêtues d'un matériau de revêtement (8), ledit matériau de revêtement (8) étant conçu pour être éliminé par usure au niveau de toute partie exposée des billes de verre (4), en laissant ainsi la lumière pénétrer dans les billes de verre (6) au niveau de ladite partie exposée usée et ledit matériau de revêtement (8) étant conçu pour former un revêtement rétroréfléchissant (8) réfléchissant la lumière qui a pénétré dans les billes de verre (6), ladite lumière étant réfléchie à travers les billes de verre (6) et ressortant par ladite partie exposée où le revêtement a été éliminé par usure,
dans lequel le matériau de revêtement (8) est fourni dans une quantité telle qu'avant son élimination par usure, le revêtement (8) soit non translucide,
dans lequel le matériau de revêtement (8) est fourni dans une quantité telle que, lorsqu'il est appliqué sur des billes de verre de saupoudrage (4) selon EN 1423 classe A ayant une taille de 180 à 600 µm et les billes de verre portant un revêtement étant fournies dans une quantité de 30 % en poids dans une composition de référence non pigmentée, la lumière qui pénètre dans la bille de verre soit rétroréfléchie dans la région d'interface du verre et du revêtement, ou dans le revêtement, pour produire une réflectivité d'au moins 100 mcd/lux/m², mesurée sur un simulateur d'usure tournant selon EN 13197 dans la classe de trafic P4.

9. Kit d'éléments pour la formation d'un marquage routier sur une surface, le kit d'éléments comprenant :
une composition de base (3), et
des billes de verre de saupoudrage portant un revêtement (4),
dans lequel la composition de base et les billes de verre de saupoudrage portant un revêtement sont fournies sans être mélangées les unes avec les autres,
dans lequel la composition de base (3) est conçue pour être appliquée sur une surface (2) et les billes de verre portant un revêtement (4) sont conçues pour être ensuite appliquées sur la composition de base en tant que billes de saupoudrage (4),
dans lequel les billes de verre portant un revêtement (4) sont revêtues d'un matériau de revêtement (8), ledit matériau de revêtement (8) étant conçu pour être éliminé par usure au niveau de toute partie exposée des billes de verre (4), en laissant ainsi la lumière pénétrer dans les billes de verre (6) au niveau de ladite partie exposée usée et ledit matériau de revêtement (8) étant conçu pour former un revêtement rétroréfléchissant (8) réfléchissant la lumière qui a pénétré dans les billes de verre (6), ladite lumière étant réfléchie à travers les billes de verre (6) et ressortant par ladite partie exposée où le revêtement a été éliminé par usure,
dans lequel le matériau de revêtement (8) est fourni dans une quantité telle qu'avant son élimination par usure, le revêtement (8) soit non translucide,
dans lequel le matériau de revêtement (8) est fourni dans une quantité telle que, lorsqu'il est appliqué sur des billes de verre de saupoudrage (4) selon EN 1423 classe A ayant une taille de 180 à 600 µm et les billes de verre portant un revêtement étant fournies dans une quantité de 30 % en poids dans une composition de référence non pigmentée, la lumière qui pénètre dans la bille de verre soit rétroréfléchie dans la région d'interface du verre et du revêtement, ou dans le revêtement, pour produire une réflectivité d'au moins 100 mcd/lux/m², mesurée sur un simulateur d'usure tournant selon EN 13197 dans la classe de trafic P4,
dans laquelle la quantité de pigment dans ledit matériau de revêtement est comprise entre 0,5 % et 5 % en poids du verre des billes de verre de saupoudrage portant un revêtement (4).

10. Marquage selon la revendication 8 ou marquage formé du kit d'éléments selon la revendication 9, dans lequel les billes de verre de saupoudrage portant un revêtement sont appliquées sur une surface visible du marquage dans une quantité moyenne de 200 à 600 grammes par mètre carré de la surface visible.
